# EUROPÄISCHE PATENTANMELDUNG

(11) **EP 4 328 540 A1**
(43) Veröffentlichungstag der Anmeldung: **28.02.2024**
(21) Anmeldenummer: 23193566.9
(22) Anmeldetag: 25.08.2023
(51) Int. Cl.: G01B 11/22, G01M 17/02, G01B 11/25

(54) **VORRICHTUNG UND VERFAHREN ZUR MESSUNG DER PROFILTIEFE VON FAHRZEUGREIFEN**

(30) Priorität: 26.08.2022 DE 102022121709
(71) Anmelder: Kiefer, Michael, 66693 Mettlach (DE); Buerakov, Wassili, 66839 Schmelz (DE)
(72) Erfinder: Kiefer, Michael, 66693 Mettlach (DE); Buerakov, Wassili, 66839 Schmelz (DE)
(74) Vertreter: Patentanwälte Bernhardt / Wolff Partnerschaft mbB

(57) **Zusammenfassung**

Die Erfindung betrifft eine Vorrichtung (1a) zur Messung der Profiltiefe von Fahrzeugreifen. Um eine zuverlässige und schnelle Messung zu ermöglichen, umfasst die Vorrichtung (1a) mindestens eine Beleuchtungseinrichtung (11a; 11b) zur Projektion eines Musters auf den Außenumfang eines Fahrzeugreifens und mindestens eine Kamera (12) zum Erfassen des projizierten Musters.

## Beschreibung

Die Erfindung betrifft eine Vorrichtung nach dem Oberbegriff des Anspruchs 1 sowie ein Verfahren zur Messung der Profiltiefe von Fahrzeugreifen.

Fahrzeugreifen weisen umfangsseitig auf der Lauffläche eine Struktur aus Rillen auf, welche als Reifenprofil bezeichnet wird. Für einen sicheren Kontakt des Fahrzeugreifens zum Boden hat das Reifenprofil eine große Bedeutung, insbesondere betreffend das Fahrverhalten bei Regen und Schnee. Durch die Rillen des Reifenprofils wird Schnee und Regen aufgenommen und weitergeleitet und damit der Kontakt zum Boden aufrechterhalten. Die fortwährende Abnutzung der Lauffläche führt jedoch zu einer Reduzierung der Profiltiefe und ab einer bestimmten Mindestprofiltiefe muss aus Sicherheitsgründen der Fahrzeugreifen ersetzt werden. Die Überwachung einer ausreichenden Profiltiefe stellt folglich einen wichtigen Prüfschritt bei der Überwachung der Betriebssicherheit eines Fahrzeugs dar. Zur Bestimmung der Profiltiefe kann beispielsweise ein Messschieber verwendet werden, wobei die Profiltiefe an mehreren Stellen über die Breite des Fahrzeugreifens überprüft werden sollte, da es oftmals zu einer ungleichmäßigen Abnutzung des Fahrzeugreifens über dessen Breite kommt. Eine Messung mit einem Messschieber an allen Fahrzeugreifen eines Fahrzeugs und jeweils an mehreren Stellen eines jeden Fahrzeugreifens ist jedoch mit entsprechendem Zeitaufwand verbunden.

Aufgabe der Erfindung ist es, eine Vorrichtung und ein Verfahren zu schaffen, welche eine zuverlässige und schnelle Messung der Profiltiefe von Fahrzeugreifen ermöglichen.

Diese Aufgabe wird dadurch gelöst, dass die Vorrichtung mindestens eine Beleuchtungseinrichtung zur Projektion eines Musters auf den Außenumfang eines Fahrzeugreifen und mindestens eine Kamera zum Erfassen des projizierten Musters umfasst. Bei dem Muster handelt es sich vorzugsweise um ein zweidimensionales Muster, insbesondere ein zufälliges (stochastisches) Muster, beispielsweise in Form von zufällig verteilten schwarzen Punkten auf einer weißen bzw. andersfarbigen Oberfläche oder umgekehrt. Das Muster kann, insbesondere wenn es sich bei der Vorrichtung um eine mobile Einheit handelt, vorzugsweise eine flächige Ausdehnung mit einer Breite von mindestens 1 cm, bevorzugt mindestens 2 cm und besonders bevorzugt mindestens 5 cm, aufweisen. Die Länge des Musters kann vorzugsweise mindestens 30 cm, insbesondere mindestens 50 cm sein. Wird die Vorrichtung als stationäre Einheit verwendet, kann die Breite des Musters vorzugsweise auch mindestens 7 cm, insbesondere mindestens 8 cm, und die Länge vorzugsweise mindestens 30 cm, insbesondere mindestens 40 cm, sein. Mittels des Musters können im Rahmen der Photogrammetrie mehrere Bilder der Lauffläche des Fahrzeugreifens aus unterschiedlichen Perspektiven zueinander ausgerichtet und die räumliche Position und die Orientierung der Kamera von jedem Bild berechnet werden. Basierend auf den ausgerichteten Bildern ist es dann möglich, mittels Triangulation die räumliche Position jedes Pixels zu bestimmen und eine dreidimensionale Punktewolke bzw. ein Modell des Außenumfangs des Fahrzeugreifens zu berechnen. Hieraus kann anschließend rechnerisch die Profiltiefe über die gesamte Breite des Fahrzeugreifens ermittelt werden.

In einer vorteilhaften Ausführungsform sind mehrere Beleuchtungseinrichtungen vorgesehen, welche jeweils ausgebildet sind, gemeinsam ein Muster auf den Außenumfang des Fahrzeugreifens zu projizieren. Hierdurch kann das Muster über die gesamte Breite des Fahrzeugreifens zuverlässig auch in tiefe Rillen projiziert werden und damit die Profiltiefe über die gesamte Breite des Fahrzeugreifen besonders zuverlässig gemessen werden.

In eine besonders vorteilhaften Ausführungsform ist die mindestens eine Kamera relativ zu der Beleuchtungseinrichtung bzw. den Beleuchtungseinrichtungen verfahrbar. Hierdurch kann der Außenumfang bzw. die Lauffläche des Fahrzeugreifens über die gesamte Breite erfasst werden und es ist zudem eine Anpassung an unterschiedliche Spurweiten verschiedener Fahrzeuge problemlos möglich. Der Verfahrweg der Kamera wird dabei vorzugsweise gemessen, beispielsweise über einen Schrittmotor-Antrieb, so dass von jedem erfassten Bild die Position und Orientierung der Kamera bekannt ist. Zusätzlich wird die Position der Kammer bei jedem Bild wie beschrieben über einen Abgleich der erfassten Bilder mit dem projizierten Muster berechnet. Hierdurch kann der Maßstab bei der Umrechnung der in Pixel erfassten Bildpunkte der Bilder in tatsächliche Längeneinheiten erfolgen. Alternativ können auch Referenzpunkte in Form von Passmarken vorgesehen sein, welche über die Kamera erfasst werden.

In einer alternativen Ausführungsform können mehrere, voneinander beabstandete Kameras vorgesehen sein, welche in Bezug auf die Beleuchtungseinrichtung bzw. die Beleuchtungseinrichtungen eine feste Position aufweisen. Über die bekannte Position und Orientierung der Kameras zueinander und relativ zu der Beleuchtungseinrichtung bzw. den Beleuchtungseinrichtungen kann ebenfalls wie oben angegeben die Profiltiefe bestimmt werden.

Vorteilhaft können die Kamera/-s und die Beleuchtungseinrichtung/-en in einem gemeinsamen Gehäuse angeordnet sein, wobei das Gehäuse vorzugsweise eine längliche Form, insbesondere eine Quaderform, aufweist und die Beleuchtungseinrichtung/-en sowie die Kamera/-s durch eine Längsseite des Gehäuses hindurch nach außen gerichtet sind. Das Gehäuse ermöglicht eine ausreichende Stabilität, so dass die Vorrichtung zur Messung der Profiltiefe von einem zu vermessenden Fahrzeug einfach überfahren werden kann.

Die Längsseite des Gehäuses wird vorzugsweise durch eine transparente Wand gebildet, durch welche die Beleuchtungseinrichtung/-en das Muster auf den Außenumfang des Fahrzeugreifen projizieren und die Kamera/-s das projizierte Muster erfassen kann/können.

Um den Fahrzeugreifen bei der Messung der Profiltiefe exakt positionieren zu können, kann die Vorrichtung einen Reifenschuh umfassen. Der Reifenschuh weist eine Mulde auf, in welcher der Fahrzeugreifen zentriert wird.

In einer alternativen Ausführungsform kann die Vorrichtung auch eine insbesondere höhenverstellbare Auflagefläche für einen Fahrzeugreifen umfassen. Dies ist insbesondere dann vorteilhaft, wenn ein demontierter Fahrzeugreifen vor der Einlagerung oder vor der Montage an einem Fahrzeug hinsichtlich der Profiltiefe vermessen werden soll. Die zu vermessenden Fahrzeugreifen können dann von Hand auf der Auflagefläche abgelegt oder beispielsweise über eine Rollenbahn zugeführt und abtransportiert werden.

Die Auflagefläche kann an einer Rückwand der Vorrichtung befestigt sein, in welcher mindestens eine Beleuchtungseinrichtung zur Projektion eines Musters auf den Außenumfang eines auf der Auflagefläche angeordneten Fahrzeugreifens und mindestens eine Kamera zum Erfassen des projizierten Musters angeordnet sind. Um einen definierten Abstand des Fahrzeugreifens zu der Rückwand zu gewährleisten, kann an der Rückwand zudem mindestens ein Abstandshalter in Richtung der Auflagefläche vorgesehen sein.

In einer vorteilhaften Ausführungsform kann in einem vorstehenden Kopfteil, welches insbesondere an einem oberen Ende der Rückwand angeordnet ist, mindestens eine weitere Kamera und/oder mindestens eine Beleuchtungseinrichtung angeordnet sein, um die Geometrie der Oberseite/Stirnseite eines auf der Auflagefläche flach angeordneten Fahrzeugrads zu erfassen. Hiermit können weitere Parameter des Fahrzeugrads, insbesondere der Fahrzeugfelge, wie beispielsweise die Einpresstiefe, der Lochkreisdurchmesser, die Anzahl an Schraubenlöchern oder der Durchmesser der Radnabenbohrung, erfasst werden. Dies ermöglicht eine schnelle Überprüfung, ob das Fahrzeugrad die richtige Fahrzeugfelge aufweist. Zusätzlich oder alternativ können auch in der Auflagefläche oder unter der Auflagefläche mindestens eine Beleuchtungseinrichtung und eine Kamera angeordnet und nach oben ausgerichtet sein, um die Geometrie der Unterseite eines auf der Auflagefläche angeordneten Fahrzeugreifens zu erfassen.

Des Weiteren wird auch ein Verfahren zur Messung der Profiltiefe von Fahrzeugreifen beansprucht, welches dadurch gekennzeichnet ist, dass ein zu vermessender Fahrzeugreifen an der vorgenannten Vorrichtung vorbeibewegt und die Profiltiefe hierbei vorzugsweise mittels Photogrammetrie gemessen wird. Der Fahrzeugreifen kann kontinuierlich an der Vorrichtung vorbeibewegt werden oder zur Messung kurzzeitig eine stationäre Position in Bezug auf die Vorrichtung aufweisen.

In einer vorteilhaften Ausführungsform kann die Vorrichtung von einem Fahrzeug mit den zu vermessenden Fahrzeugreifen überfahren und dabei von mindestens einem Fahrzeugreifen die Profiltiefe gemessen werden. Wird für jede Spur des Fahrzeugs je eine Vorrichtung vorgesehen oder eine Vorrichtung verwendet, welche ausreichend lang ist, um beide Spuren zu erfassen, können in einem einzigen Messvorgang die Fahrzeugreifen einer Achse vermessen werden.

In einer besonders vorteilhaften Ausführungsform kann die Vorrichtung als mobile Einheit ausgebildet sein, welche an den Einsatzort transportiert, am Boden abgelegt, zur Messung der Profiltiefe verwendet und anschließend wieder abtransportiert wird.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: eine perspektivische Darstellung einer ersten Ausführungsform einer Vorrichtung zur Messung der Profiltiefe von Fahrzeugreifen;
- Fig. 2: eine Seitenansicht auf ein Fahrzeugrad eines Fahrzeugs während der Messung mittels der Vorrichtung von Figur 1;
- Fig. 3: eine perspektivische Darstellung von Komponenten der Vorrichtung von Figur 1 gemäß einer ersten Alternative;
- Fig. 4: eine perspektivische Darstellung von Komponenten der Vorrichtung von Figur 1 gemäß einer zweiten Alternative;
- Fig. 5: eine perspektivische Darstellung einer zweiten Ausführungsform einer Vorrichtung zur Messung der Profiltiefe von Fahrzeugreifen und
- Fig. 6: die Darstellung der Vorrichtung von Figur 5 mit teilweise ausgeblendeten Komponenten.

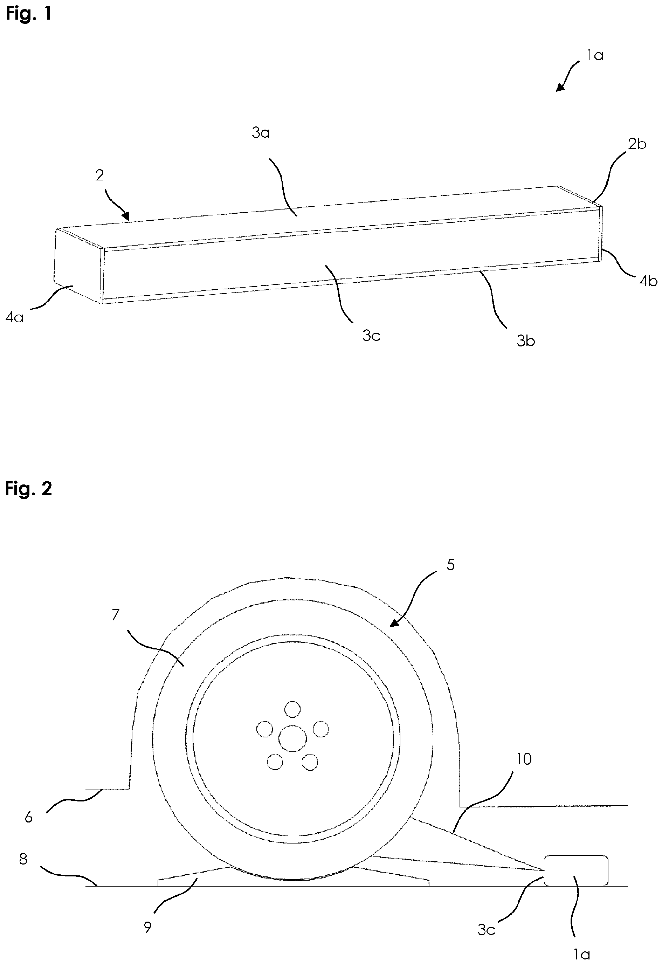

In Figur 1 ist eine perspektivische Darstellung einer ersten Ausführungsform einer Vorrichtung 1a zur Messung der Profiltiefe von Fahrzeugreifen gezeigt. Die Vorrichtung 1a umfasst ein Gehäuse 2 mit einer länglichen Form und einem konstanten Querschnitt in Längsrichtung, welches in diesem Ausführungsbeispiel quaderförmig ausgebildet ist. Eine obere Längsseite 3a und eine untere Längsseite 3b sowie eine hier nicht gezeigte Rückseite können aus einem Strangprofil beispielsweise aus Metall, insbesondere aus Aluminium, mit einem vorzugsweise U-förmigen Querschnitt gebildet sein. Eine weitere, seitliche Längsseite 3c wird durch eine Wand gebildet, welche zumindest für die Wellenlängen von Licht transparent ist, welche für die nachfolgend beschriebene optische Messung der Profiltiefe von Fahrzeugreifen relevant ist. An den stirnseitigen Enden des Gehäuses 2 sind jeweils das Gehäuse 2 abschließende Deckel 4a, 4b vorgesehen. Für einen einfachen Transport kann in einer nicht gezeigten Ausführungsform an dem Gehäuse 2 der Vorrichtung 1a, insbesondere an der Längsseite 3a oder der nicht gezeigten Rückseite, ein Haltegriff vorgesehen sein. Des weiteren können auch Stege beispielsweise aus Metall, insbesondere aus Aluminium, vorgesehen sein, welche an der Längsseite 3c die Schenkel des U-förmigen Strangprofils an den freien Enden miteinander verbinden und damit das Gehäuse 2 verstärken.

In Figur 2 ist eine Seitenansicht auf ein Fahrzeugrad 5 eines Fahrzeugs 6 während der Messung mittels der Vorrichtung 1a von Figur 1 gezeigt. Das Fahrzeugrad 5 ist mit seinem Fahrzeugreifen 7 in einem auf einem Boden 8 angeordneten Reifenschuh 9 positioniert. Durch die hier nicht bezifferte Mulde des Reifenschuhs 9 wird das Fahrzeugrad 5 mit dem Fahrzeugreifen 7 positionsgenau zentriert und zudem gegenüber dem Boden 8 angehoben, was die Messung vereinfacht. Seitlich von dem Reifenschuh 9 ist die Vorrichtung 1a auf dem Boden 8 abgelegt. Die Vorrichtung 1a ist dabei derart orientiert, dass die Längsrichtung des Gehäuses 2 quer zur Längsrichtung des Fahrzeugs 6 angeordnet ist. Die transparente Längsseite 3c der Vorrichtung 1a zeigt in Richtung des Fahrzeugreifen 7, so dass die Vorrichtung 1a über die schematisch dargestellten Lichtstrahlen 10 einen Abschnitt des Außenumfangs des Fahrzeugreifen 7, also der Lauffläche, optisch erfassen kann. Bei der gezeigten Ausführungsform sind der Reifenschuh 9 und die Vorrichtung 1a als separate Elemente ausgebildet, welche unabhängig voneinander auf den Boden 8 abgelegt werden können. In einer nicht dargestellten Ausführungsform kann der Reifenschuh 9 und die Vorrichtung 1a jedoch auch einteilig ausgebildet sein. Zusätzlich kann die Vorrichtung auch in einer überfahrbaren Rampe oder in einem Reifenschuh integriert sein.

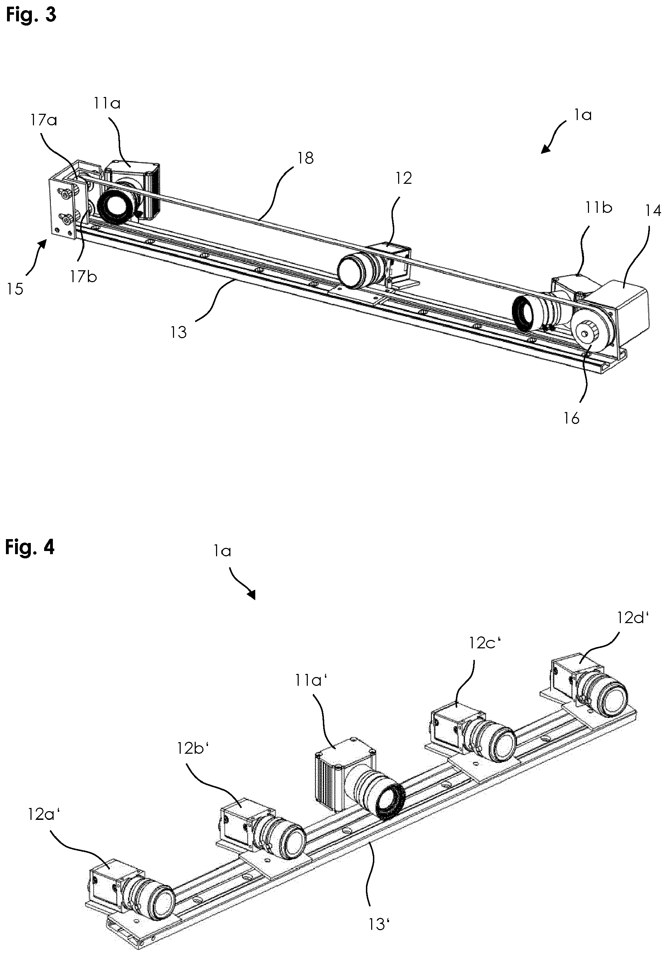

In Figur 3 ist eine perspektivische Darstellung von Komponenten der Vorrichtung 1a von Figur 1 gemäß einer ersten Alternative gezeigt. Wie der Darstellung zu entnehmen ist, weist die Vorrichtung 1a in dem hier nicht gezeigten Gehäuse 2 zwei Beleuchtungseinrichtungen 11a, 11b zur Projektion eines Musters auf den Außenumfang eines Fahrzeugreifens und eine Kamera 12 zum Erfassen des projizierten Musters auf. Über die beiden Beleuchtungseinrichtungen 11a, 11b, welche in dem gezeigten Ausführungsbeispiel in einem Winkel zueinander ausgerichtet sind, kann jeweils ein Teilmuster auf den Fahrzeugreifen projiziert werden, welche dann zusammen das projizierte Muster ergeben. Die Teilmuster müssen sich hierbei nicht zwangsläufig überlappen und es ist auch nicht notwendig, dass sich die Teilmuster gegenseitig fortsetzen oder identische Abschnitte aufweisen. Zur Erfassung des projizierten Musters und der Laufläche aus mehreren Perspektiven ist die Kamera 12 relativ zu den Beleuchtungseinrichtungen 11a, 11b verfahrbar ausgebildet. Hierzu ist eine Profilschiene 13 vorgesehen, welche sich in Längsrichtung des Gehäuses 2 erstreckt. An einem ersten Ende der Profilschiene 13 ist ein Schrittmotor 14 und an einem gegenüberliegenden Ende eine Umlenkvorrichtung 15 vorgesehen. Über eine mit dem Schrittmotor 14 verbundene Zahnriemenscheibe 16 und zwei Umlenkrollen 17a, 17b der Umlenkvorrichtung 15 ist ein Zahnriemen 18 aufgespannt. An einem Trum des Zahnriemens 18, in diesem Ausführungsbeispiel an dem unteren Trum, ist die Kamera 12 befestigt. Über einen hier nicht bezifferten Schlitten ist die Kamera 12 zudem längsbeweglich in der Profilschiene 13 geführt. Hierdurch wird ein Linearantrieb mit einem definierten Verfahrweg der Kamera 12 ermöglicht, so dass die relative Position der Kamera 12 bei jedem erfassten Bild exakt bekannt ist und damit die tatsächlichen Maße der dreidimensionalen Geometrie der Lauffläche eines Fahrzeugreifen ermittelt werden können. Bei dem gezeigten Ausführungsbeispiel ist jeweils eine Beleuchtungseinrichtung 11a benachbart zu der Umlenkvorrichtung 15 und eine weitere Beleuchtungseinrichtung 11b benachbart zu dem Schrittmotor 14 angeordnet, so dass die Beleuchtungseinrichtungen 11a, 11b einen besonders großen Abstand zueinander aufweisen. Eine Steuerung/Regelung und Energieversorgung für den Schrittmotor und die Beleuchtungseinrichtung/-en sowie die Kamera/-s können in dem Gehäuse 2 oder einem separaten Gehäuse angeordnet sein, welches über ein Kabel (beispielsweise mit Mehrfachstecker) mit dem Gehäuse 2 elektrisch verbindbar ist.

In Figur 4 ist eine perspektivische Darstellung von Komponenten der Vorrichtung 1 von Figur 1 gemäß einer zweiten Alternative gezeigt. Wie auch bei der Darstellung von Figur 3 ist das Gehäuse 2 nicht gezeigt. Ähnliche Komponenten wie bei der ersten Alternative gemäß der Figur 3 sind mit den gleichen Bezugszeichen, jedoch einem zusätzlichen Apostroph gekennzeichnet. Wie der Darstellung zu entnehmen ist, sind bei der zweiten Alternative an einer Profilschiene 13' mittig eine Beleuchtungseinrichtung 11a' und zu beiden Seiten hiervon mehrere, voneinander beabstandete Kameras 12 a', 12b', 12c', 12d' vorgesehen. Die Kameras 12a', 12b', 12c' und 12d' sind fest an der Profilschiene 13' befestigt, wobei je zwei Kameras 12a', 12b' bzw. 12c', 12d' auf jeder Seite der Beleuchtungseinrichtung 11a' angeordnet sind. Die Kameras 12a', 12b', 12c', 12d' sind jeweils in einem Winkel in Richtung der Beleuchtungseinrichtung 11a' zueinander ausgerichtet. Die relative Position der Kameras 12a', 12b', 12c', 12d' zueinander ist dabei bekannt und fest, so dass die hiermit erfassten Bilder jeweils einer bestimmten Position und Orientierung einer Kamera zugeordnet und hieraus ebenfalls die tatsächlichen Maße der dreidimensionalen Geometrie der Lauffläche eines Fahrzeugreifens ermittelt werden kann.

Bei der ersten Alternative gemäß der Figur 3 und der zweiten Alternative gemäß der Figur 4 sind die optischen Achsen der Kameras und Beleuchtungseinrichtungen seitlich von der Profilschiene 13, 13' weg durch die nicht gezeigte transparente Längsseite 3c des Gehäuses 2 nach außen gerichtet. Durch das Gehäuse 2 mit der transparenten Längsseite 3c werden die empfindlichen Komponenten, insbesondere die Kameras und die Beleuchtungseinrichtungen sowie die Längsführung bei der ersten Alternative zuverlässig vor äußeren Einflüssen wie Staub und Feuchtigkeit geschützt.

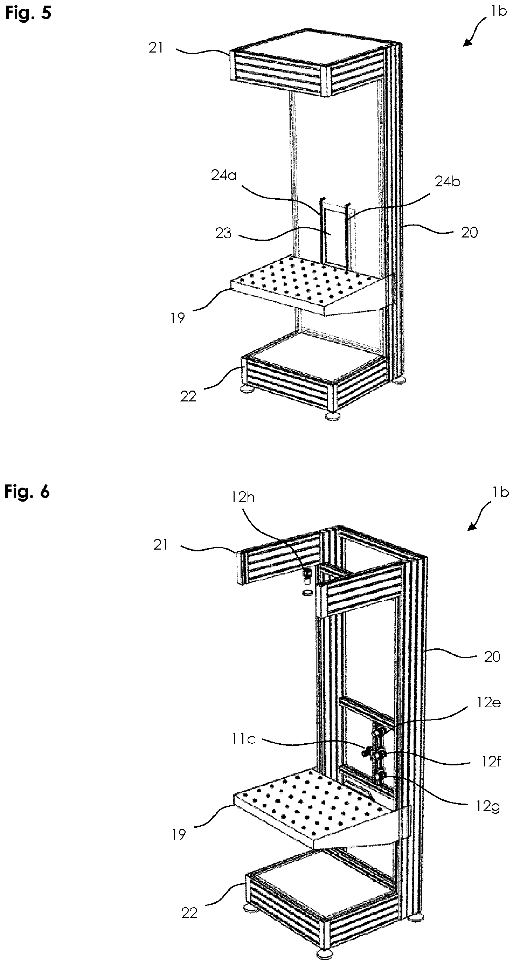

In Figur 5 ist eine perspektivische Darstellung einer zweiten Ausführungsform einer Vorrichtung 1b zur Messung der Profiltiefe von Fahrzeugreifen gezeigt. Die Vorrichtung 1b ist dabei als stationäre Einheit ausgebildet und umfasst eine höhenverstellbare Auflagefläche 19 für einen Fahrzeugreifen, welche an einer Rückwand 20 vertikal beweglich befestigt ist. An dem oberen Ende der Rückwand 20 ist ein vorstehendes Kopfteil 21 vorgesehen, welches vertikal über der Auflagefläche 19 angeordnet ist. In die gleiche Richtung wie das Kopfteil 21 steht an dem entgegengesetzten unteren Ende der Rückwand 20 ein Fußteil 22 von der Rückwand 20 vor, welches mit hier nicht bezifferten Stehfüßen einen sicheren Stand der Vorrichtung 1b ermöglicht. In der Rückwand 20 ist oberhalb der Auflagefläche 19 ein Fenster 23 vorgesehen, durch welches hindurch ein auf der Auflagefläche 19 angeordneter Fahrzeugreifen optisch erfasst werden kann. Um einen definierten Abstand des zu vermessenden Fahrzeugreifens zu der Rückwand zu ermöglichen, stehen zwei Abstandshalter 24a, 24b von der Rückwand 20 in Richtung der Auflagefläche 19 vor, welche bügelförmig gebogen und vertikal ausgerichtete jeweils seitlich von dem Fenster 23 angeordnet sind. Die Positionierung eines Fahrzeugreifens oder gegebenenfalls eines kompletten Fahrzeugrads wird dadurch erleichtert, dass auf der Auflagefläche 19 nach oben vorstehende drehbare Rollen, insbesondere Kugelrollen, vorgesehen sind.

In Figur 6 ist die Darstellung von Figur 5 mit ausgeblendeten Komponenten der Rückwand 20 und des Kopfteils 21 gezeigt. Wie dort zu entnehmen ist, sind in der Rückwand eine Beleuchtungseinrichtung 11c sowie drei Kameras 12e, 12f, 12g angeordnet und in Richtung der Auflagefläche 19 durch das hier nicht gezeigte Fenster 23 ausgerichtet. Hierdurch kann die Lauffläche eines flach auf der Auflagefläche 19 liegenden Fahrzeugreifens bzw. Fahrzeugrads erfasst werden. In Abhängigkeit von der Breite des Fahrzeugreifens kann dabei die Höhe der Auflagefläche 19 verstellt werden, um den Fahrzeugreifen optimal in Bezug auf die Beleuchtungseinrichtung 11c und die Kameras 12e, 12f, 12g auszurichten. Über die Beleuchtungseinrichtung 11c kann anschließend wie bezüglich der vorgenannten Ausführungsform bereits beschrieben ein Muster auf den Außenumfang des Fahrzeugreifen projiziert und über die Kameras 12e, 12f, 12g das projizierte Muster erfasst werden, wodurch sich die dreidimensionale Geometrie der Lauffläche des Fahrzeugreifens zumindest in einem Abschnitt berechnen lässt. In einer nicht gezeigten Ausführungsform können auch mehrere Beleuchtungseinheiten vorgesehen sein, welche ausgebildet sind, gemeinsam ein Muster auf den Außenumfang des zu vermessenden Fahrzeugreifens zu projizieren. Zudem kann in einer weiteren nicht gezeigten Ausführungsform anstelle der festen Kameras 12e, 12f, 12g mindestens eine verfahrbare Kamera entsprechend der in Figur 3 gezeigten Ausführungsform in der Rückwand 20 vorgesehen sein. Über die Kamera kann eine Höhenanpassung erfolgen und mit entsprechend langem Verfahrweg können auch besondere breite Fahrzeugreifen über die gesamte Breite erfasst werden. Es können dabei ebenfalls mehrere, fest montierte Beleuchtungseinrichtungen vorgesehen sein, welche in vertikaler Richtung voneinander beabstandet sind. Eine Höhenverstellbarkeit der Auflagefläche 19 ist dann nicht notwendig, was eine Integration der Vorrichtung 1b in eine Transportanlage, insbesondere eine Rollenbahn, erleichtert.

Wie der Figur 6 weiter zu entnehmen ist, können in dem vorstehenden Kopfteil 21 eine weitere Kamera 12a und gegebenenfalls weitere Beleuchtungseinrichtungen vorgesehen sein, welche nach unten in Richtung der Auflagefläche 19 gerichtet sind. Hierdurch kann die Geometrie der Oberseite eines auf der Auflagefläche 19 flach angeordneten Fahrzeugrads erfasst werden, wodurch beispielsweise Parameter der Felge wie die Einpresstiefe, der Lochkreisdurchmesser, die Anzahl an Schraubenlöchern oder der Durchmesser der Radnabenbohrung ermittelt werden können. Dies ermöglicht zusätzlich zur Bestimmung der Profiltiefe die Prüfung, ob die richtige Felge montiert wurde. Die Vorrichtung 1b kann insbesondere vorteilhaft dafür verwendet werden, um bei der Entnahme von Fahrzeugrädern aus einem Lager jedes Fahrzeugrad schnell hinsichtlich der vorhandenen Profiltiefe und der montierten Felge zu überprüfen. Hierzu kann die Vorrichtung 1b insbesondere in eine Rollenbahn integriert werden. In einer nicht gezeigten Ausführungsform können auch mindestens eine Beleuchtungseinrichtung und mindestens eine Kamera in oder unterhalb der Auflagefläche 19 angeordnet und nach oben ausgerichtet sein, um die Geometrie der Unterseite eines auf der Auflagefläche 19 angeordneten Fahrzeugreifens zu erfassen. Die Beleuchtungseinrichtung und die Kamera sind zusammen mit der Auflagefläche höhenverstellbar, so dass der Abstand der Beleuchtungseinrichtung und der Kamera zu einem auf der Auflagefläche angeordneten Fahrzeugreifen immer konstant ist. Eine Erfassung der Geometrie ist jedoch auch bei unterschiedlichen Abständen möglich. Alle Ergebnisse der Messungen (bspw. seitlich, von oben, von unten) können mittels eines Kalibrierkörpers, der im Messvolumen platziert wird, zu einem maßstabsgetreuen 3D-Model verrechnet werden. Mittels des Kalibrierkörpers kann also ein globales Koordinatensystem aufgespannt werden. Der Kalibrierkörper wird hierbei vorzugsweise als 3D-Objekt bestückt mit kodierten und/oder nicht kodierten Messmarken ausgeführt. Koordinaten der Messmarken, die seitens der Software automatisch erkannt werden, sind bekannt und werden mittels einer Kalibrierung ermittelt und in der Software hinterlegt.

Um die Profiltiefe eines Fahrzeugreifen zu messen, wird der zu vermessene Fahrzeugreifen vorteilhaft an einer der beschriebenen Vorrichtungen vorbeibewegt. Der Fahrzeugreifen kann dabei kontinuierlich bewegt werden oder kurzzeitig während der Messung einen festen Abstand zu der Vorrichtung aufweisen. Insbesondere kann vorgesehen sein, dass die Vorrichtung von einem Fahrzeug mit zu vermessendem Fahrzeugreifen überfahren und dabei von mindestens einem Fahrzeugreifen die Profiltiefe gemessen wird. Die Vorrichtung kann dabei vorteilhaft wie bei der in Figur 1 gezeigten ersten Ausführungsform als mobile Einheit ausgebildet sein, welche an den Einsatzort transportiert, am Boden gegebenenfalls ohne zusätzliche Fixierung abgelegt, zur Messung der Profiltiefe verwendet und anschließend wieder abtransportiert werden kann. Alternativ ist auch denkbar, dass die Vorrichtung als mobile Einheit unter ein Fahrzeug angrenzend zu einem zu vermessenden Fahrzeugrad geschoben wird und anschließend die Profiltiefe ermittelt wird.

Für die Projektion des Musters wird in der/den Beleuchtungseinrichtung/-en im Außenbereich vorzugsweise monochromatisches Licht verwendet. Im Innenbereich hat dies weniger Einfluss und es können auch polychromatisches Licht bzw. unterschiedliche Spektralfarben verwendet werden. Vorteilhaft werden jedoch LEDs verwendet, die weißes, rotes, grünes oder blaues Licht emittieren.

Die Auswertung der Messdaten kann sowohl lokal auf einem Rechner, als auch auf einem Server in einem Netzwerk vorgenommen werden. Bei Verarbeitung der Messdaten auf einem Server werden die aufgenommenen Fotos zunächst auf diesen Server übertragen. Nach Abschluss der Auswertung werden Messergebnisse auf einen lokalen Rechner übertragen und angezeigt. Alternativ können auf einem Server berechnete Ergebnisse auf einem Mobilgerät angezeigt werden. Die Möglichkeit die Messergebnisse auf einem Mobilgerät anzeigen zu können, hat den Vorteil, dass diese an beliebige Mobilgeräte, die über eine entsprechende App verfügen, gesendet werden können.

### Bezugszeichenliste:

- 1a, 1b: Vorrichtung zur Profiltiefenmessung von Fahrzeugreifen
- 2: Gehäuse
- 3a, 3b, 3c: Längsseiten
- 4a, 4b: Deckel
- 5: Fahrzeugrad
- 6: Fahrzeug
- 7: Fahrzeugreifen
- 8: Boden
- 9: Reifenschuh
- 10: Lichtstrahlen
- 11a, 11b, 11a', 11c: Beleuchtungseinrichtung
- 12, 12a', 12b', 12c', 12d', 12e, 12f, 12g, 12h: Kamera
- 13, 13': Profilschiene
- 14: Schrittmotor
- 15: Umlenkvorrichtung
- 16: Zahnriemenscheibe
- 17a, 17b: Umlenkrollen
- 18: Zahnriemen
- 19: Auflagefläche
- 20: Rückwand
- 21: Kopfteil
- 22: Fußteil
- 23: Fenster
- 24a, 24b: Abstandshalter

## Patentansprüche

1. Vorrichtung (1a; 1b) zur Messung der Profiltiefe von Fahrzeugreifen (7),
**gekennzeichnet durch**
mindestens eine Beleuchtungseinrichtung (11a; 11b; 11a'; 11c) zur Projektion eines Musters auf den Außenumfang eines Fahrzeugreifens (7) und mindestens eine Kamera (12; 12a`; 12b'; 12c'; 12d'; 12e; 12f; 12g) zum Erfassen des projizierten Musters.

2. Vorrichtung (1a) nach Anspruch 1,
**dadurch gekennzeichnet,**
**dass** mehrere Beleuchtungseinrichtungen (11a; 11b; 11a'; 11c) vorgesehen sind, welche jeweils ausgebildet sind, ein Muster auf den Außenumfang des Fahrzeugreifens (7) zu projizieren.

3. Vorrichtung (1a) nach Anspruch 1 oder 2,
**dadurch gekennzeichnet,**
**dass** die Kamera (12) relativ zu der Beleuchtungseinrichtung (11a; 11b) verfahrbar ist.

4. Vorrichtung (1a) nach einem der Ansprüche 1 bis 3,
**dadurch gekennzeichnet,**
**dass** mehrere, voneinander beabstandete Kameras (12a`; 12b'; 12c'; 12d') vorgesehen sind.

5. Vorrichtung (1a) nach einem der Ansprüche 1 bis 4,
**dadurch gekennzeichnet,**
**dass** die Beleuchtungseinrichtung (11a; 11b; 11a') und die Kamera (12; 12a`; 12b'; 12c`; 12d') in einem gemeinsamen Gehäuse 2 angeordnet sind.

6. Vorrichtung (1a) nach Anspruch 5,
**dadurch gekennzeichnet,**
**dass** das Gehäuse (2) eine längliche Form, insbesondere eine Quaderform, aufweist und die Beleuchtungseinrichtung (11a; 11b; 11a') sowie die Kamera (12; 12a`; 12b'; 12c`; 12d`) durch eine Längsseite (3c) hindurch nach außen gerichtet sind.

7. Vorrichtung (1a) nach Anspruch 6,
**dadurch gekennzeichnet,**
**dass** die Längsseite (3c) durch eine transparente Wand gebildet wird.

8. Vorrichtung (1a) nach einem der vorhergehenden Ansprüche,
**gekennzeichnet durch**
einen Reifenschuh (9) zur positionsgenauen Aufnahme eines Fahrzeugreifens (7).

9. Vorrichtung (1b) nach einem der Ansprüche 1 bis 5,
**gekennzeichnet durch**
eine insbesondere höhenverstellbare Auflagefläche (19) für einen Fahrzeugreifen (7).

10. Vorrichtung (1b) nach Anspruch 9,
**dadurch gekennzeichnet,**
**dass** die Auflagefläche (19) an einer Rückwand (20) befestigt ist, in welcher mindestens eine Beleuchtungseinrichtung (1 1c) zur Projektion eines Musters auf den Außenumfang eines auf der Auflagefläche (19) angeordneten Fahrzeugreifens (7) und mindestens eine Kamera (12e; 12f; 12g) zum Erfassen des projizierten Musters angeordnet sind.

11. Vorrichtung (1b) nach Anspruch 10,
**dadurch gekennzeichnet,**
**dass** von der Rückwand (20) mindestens ein Abstandshalter (24a; 24b) in Richtung der Auflagefläche (19) für einen definierten Abstand zu einem Fahrzeugreifen (7) vorsteht.

12. Vorrichtung (1b) nach einem der Ansprüche 9 bis 11,
**dadurch gekennzeichnet,**
**dass** in einem vorstehenden Kopfteil (21) und/oder in bzw. unter einer Auflagefläche (19) für einen Fahrzeugreifen eine weitere Kamera (12h) und/oder eine Beleuchtungseinrichtung angeordnet ist, um die Geometrie der Oberseite bzw. Unterseite eines auf der Auflagefläche (19) angeordneten Fahrzeugreifens (7) zu erfassen.

13. Verfahren zur Messung der Profiltiefe von Fahrzeugreifen,
**dadurch gekennzeichnet,**
**dass** ein zu vermessender Fahrzeugreifen (7) an einer Vorrichtung (1a; 1b) gemäß einem der Ansprüche 1 bis 12 vorbeibewegt und die Profiltiefe hierbei gemessen wird.

14. Verfahren nach Anspruch 13,
**dadurch gekennzeichnet,**
**dass** die Vorrichtung (1a) von einem Fahrzeug (6) mit zu vermessenden Fahrzeugreifen (7) überfahren und dabei von mindestens einem Fahrzeugreifen (7) die Profiltiefe gemessen wird.

15. Verfahren nach Anspruch 13 oder 14,
**dadurch gekennzeichnet,**
**dass** die Vorrichtung (1a) als mobile Einheit ausgebildet ist, welche an den Einsatzort transportiert, am Boden (8) abgelegt, zur Messung der Profiltiefe verwendet und anschließend wieder abtransportiert wird.
